# EUROPEAN PATENT APPLICATION

(11) **EP 1 800 981 A2**
(43) Date of publication of application: **27.06.2007**
(21) Application number: 07075208.4
(22) Date of filing: 15.10.2004
(51) Int. Cl.: B60T 8/36, F16K 31/06

(54) **Solenoid valve for brake system**

(62) Divisional of application: 04256353.6
(71) Applicant: Mando Corporation, Pyungtaek-si, Kyongki-do (KR)
(72) Inventor: Lee, Chung J., Pyungteak-Si, Gyeonggi-Do (KR)
(74) Representative: Pratt, David Martin

(57) **Abstract**

A solenoid valve (250) for a brake system is characterised by having its valve housing (269) installed in the sleeve (261) in such a way that a predetermined interval between the valve housing (269) and the movable magnet core (262) exists.

## Description

### CROSS-REFERENCE TO RELATED APPLICATION

This application claims the benefit of Korean Patent Application Nos. 2003-25258 and 2003-25259, filed April 21, 2003, in the Korean Intellectual Property Office, the disclosure of which is incorporated herein by reference.

### BACKGROUND OF THE INVENTION

### 1. Field of the Invention

The present invention relates to a brake system for vehicles, and more particularly to a solenoid valve for a brake system, which has an improved assembling efficiency, prevents the generation of foreign substances, improves the quality of the brake system, and reduces the manufacturing costs of products.

### 2. Description of the Related Art

Recently, there are proposed an anti-lock brake systems (hereinafter, referred to as 'ABSs'), among hydraulic brake systems installed in vehicles, for periodically intermitting braking hydraulic pressure transmitted to wheels and preventing slip of wheels. Such ABSs for vehicles include many solenoid valves, which are installed on the path of a hydraulic line connecting a master cylinder and a wheel cylinder or a hydraulic line returned from the wheel, for opening and closing the channel of a fluid so as to control the braking hydraulic pressure.

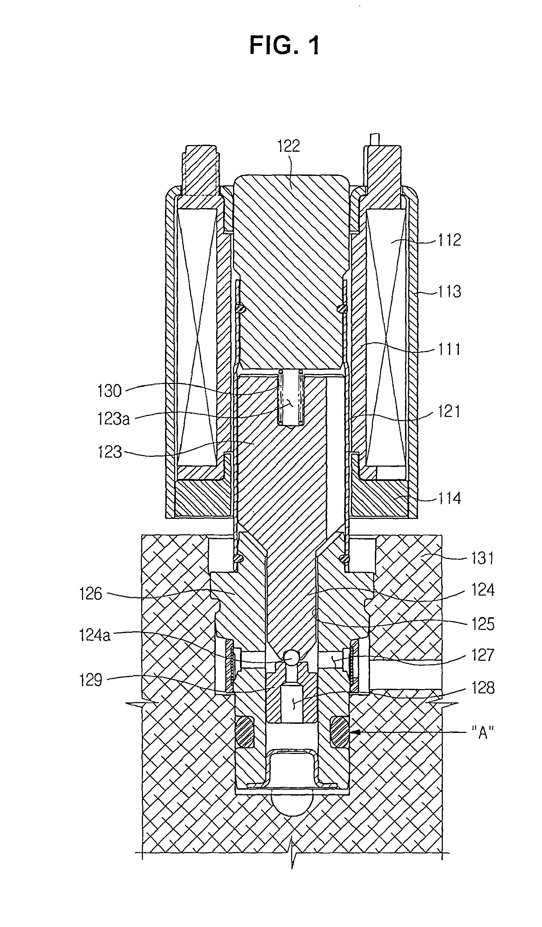

FIG. 1 illustrates a normal closed type solenoid valve 110. As shown in FIG. 1, the normal closed type solenoid valve 110 comprises a coil 112 wound on a bobbin 111 for forming an electromagnetic field when current is applied to the coil 112, a coil case 113 having a hollow cylindrical shape provided with an opened surface for surrounding the coil 112, and a flux ring 114 having a disk shape for covering the opened surface of the coil case 113. The normal closed type solenoid valve 110 opens its channel only when power is supplied to the coil 112.

In the solenoid valve 110, a sleeve 121 having a cylindrical shape provided with both opened surfaces is installed in the central area of the coil case 113, a magnet core 122 is fixedly inserted into the upper opened surface of the sleeve 121, and an armature 123 having a designated diameter is inserted into the lower opened surface of the sleeve 121 such that the armature 123 is separated from the magnet core 122 by a designated interval and moves up and down. The armature 123 interacts with the electromagnetic field formed by the coil 112, thereby moving up and down.

A plunger 124 having a rod shape with a diameter smaller than that of the armature 123 is formed integrally with the lower end of the armature 123, and moves up and down together with the movement of the armature 123. A spherical member 124a is formed on the lower end of the plunger 124.

A valve housing 126 is placed around the outer periphery of the plunger 124. A through hole 125 is formed through the central portion of the valve housing 126 in a longitudinal direction so that the plunger 124 is inserted into the valve housing 125. An oil entry route 127 is formed in the side surface of the valve housing 126, and a sheet portion 129 provided with an oil exit route 128 opened and closed by the spherical member 124a of the plunger 124 is installed in the lower portion of the through hole 125.

A return spring 130 is installed between the armature 123 and the magnet core 122, and returns the armature 123 to the sheet portion 129. A spring receiving groove 123a having a designated diameter for receiving the return spring 130 is formed in the upper end of the armature 123. Here, non-described reference numeral 131 represents a modulate block, into which the valve housing 126 is fixedly inserted.

Now, the operation of the above-described conventional solenoid valve 110 will be described in detail. When an electromagnetic field is generated by applying current to the coil 112, magnetic flux flows along the coil case 113, the flux ring 114, the armature 123, and the magnet core 122, and the armature 123 and the plunger 124 move in the opposite direction of the movement of the sheet portion 129 against the elastic force of the return spring 130, thereby opening the oil exit route 128. Thereafter, when the current applied to the coil 112 is shut off, the armature 123 and the plunger 124 move toward the sheet portion 129 by means of the elastic force of the return spring 230, thereby closing the oil exit route 128.

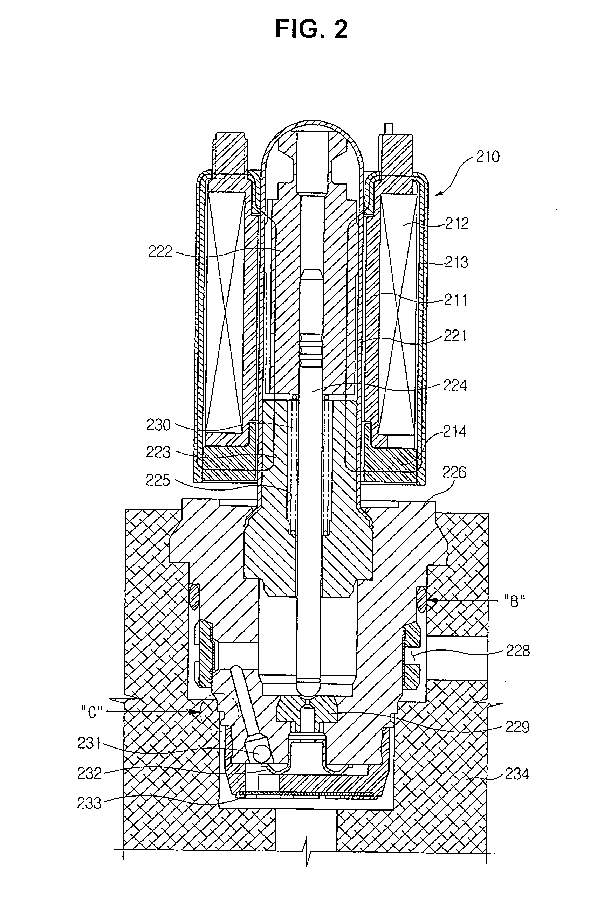

FIG. 2 illustrates a normal opened type solenoid valve 210. As shown in FIG. 2, the normal opened type solenoid valve 210 comprises a coil 212 wound on a bobbin 211 for forming an electromagnetic field when current is applied to the coil 212, a coil case 213 having a hollow cylindrical shape provided with an opened surface for surrounding the coil 212, and a flux ring 214 having a disk shape for covering the opened surface of the coil case 213. The normal opened type solenoid valve 210 closes its channel only when power is supplied to the coil 212.

In the solenoid valve 210, a sleeve 221 having a cylindrical shape is installed in the central area of the coil case 213, and the inner diameter of the lower end of the sleeve 221 is expanded. A magnet core 222 is fixedly inserted into the upper end of the sleeve 221, and an armature 223 having a designated diameter is inserted into a lower opening of the sleeve 221 such that the armature 223 is separated from the magnet core 222 by a designated interval and moves up and down. The outer diameter of the lower end of the armature 223 is expanded corresponding to the expanded inner diameter of the sleeve 221, and the lower end of the armature 223 is stepped. The armature 223 interacts with the electromagnetic field formed by the coil 212, thereby moving up and down.

A receiving groove 225 for receiving a spring 230 for assisting the returning of the armature 223 is formed in the central portion of the upper portion of the armature 223. One end of the spring 230 is supported by the magnet core 222, and the other end of the spring 230 is supported by the armature 223. A plunger 224 having a rod shape with a diameter smaller than that of the armature 223 is formed integrally with the lower end of the armature 223, and moves up and down together with the movement of the armature 223.

A valve sheet 229, which is separated from the lower end of the plunger 224 by a designated interval and has a channel formed therein and opened upper end lower portions, is fixedly installed in the valve housing 226.

The outer wall of the valve housing 226 is stepped, and sealing members are formed on both portions (portions "B") of the outer wall contacting a modulate block 234. An oil filter 233 is installed on the inner surface of the lower end of the valve housing 226, an orifice pot 232 is installed on the inner surface of the oil filter 233, and a check valve 232 is installed at one side of the inner part of the oil filter 233.

Now, the operation of the above-described conventional solenoid valve 210 will be described in detail. When an electromagnetic field is generated by applying current to the coil 212, magnetic flux flows along the coil case 213, the flux ring 214, the armature 223, and the magnet core 222, and the armature 223 and the plunger 224 move in the opposite direction of the movement of the valve sheet 229 against the elastic force of the return spring 230, thereby opening the oil exit route 228. Thereafter, when the current applied to the coil 212 is shut off, the armature 223 and the plunger 224 move toward the valve sheet 229 by means of the elastic force of the return spring 230, thereby closing the oil exit route 228.

The above-described conventional solenoid valves 110 and 210 fix and seal the valve housings 126 and 226 to the modulate blocks 131 and 234 using the sealing members (portions "A" and "B") or by processing portions "C" of the housings 126 and 226, thereby having reduced assembling efficiency and endurance. Further, in case that portions of the valve housings 126 and 226 are processed to a pocket shape and fixed to the modulate blocks 131 and 234 by means of steel deformation, the valve housings 126 and 226 are deformed and foreign substances are generated, thereby causing deterioration of the quality of the solenoid valves 110 and 210.

### SUMMARY OF THE INVENTION

Therefore, an aspect of the invention is to provide a solenoid valve for a brake system, which prevents the deformation of an assembled structure thereof and the generation of foreign substances, and has improved assembling efficiency and quality.

In accordance with one aspect, the present invention provides a solenoid valve for a brake system comprising: a coil for forming an electromagnetic field when current is applied thereto; a sleeve having a cylindrical shape and passing through the central portion of the coil; an armature, inserted into one end of the sleeve, vertically moving by means of the electromagnetic field formed by the coil; a valve housing, for accommodating the armature, inserted into one end of the sleeve and provided with an oil route opened and closed by the armature; a magnet core fixed to the other end of the sleeve and separated from the armature by a designated interval; a return spring for returning the armature to the oil route when current is not applied to the coil; and a filter fixed to the outer circumference of the lower part of the valve housing by press fit.

The filter may be formed in a mesh structure by injection molding.

The filter may be inserted into a modulate block such that both sides of upper and lower ends of the filter are fixed and sealed into the modulate block.

The valve housing may include: a through hole formed through the central portion of the valve housing; first projecting parts formed on both portions of the outer circumference of the valve housing; and second projecting parts, each of which has an inclined plane.

A modulate block, into the valve housing is inserted, may include: a through hole formed through the central portion of the modulate block for receiving the valve housing; and indentations in a stepped structure corresponding to the second projecting parts of the valve housing.

A part of the modulate block may be deformed, when the valve housing is inserted into the modulate block, to fix and seal the outer circumference and the upper end of the valve housing.

A plurality of protrusions having a stepped surface may be formed on the surface of the armature contacting the magnet core.

In accordance with another aspect, the present invention provides a solenoid valve for a brake system, comprising: a sheet portion including a through hole formed in a longitudinal direction through the central portion thereof, and a check ball for introducing and discharging a fluid therethrough; a valve housing having an inner diameter with a stepped structure for receiving the sheet portion; an armature, installed in the valve housing, moving up and down and having a circular sealing structure for opening and closing an inlet of the sheet portion when power is applied thereto and released therefrom; a sleeve installed outside the valve housing and a magnet core; a return spring for returning the armature to its original position; and a modulate block, into which the valve housing is inserted, wherein the valve housing is installed in a longitudinal direction in the sleeve such that a front end of the valve housing is separated from the magnet core by a designated interval.

The valve housing may include: a through hole formed through the central portion of the valve housing; first projecting parts formed on both portions of the outer circumference of the valve housing; and second projecting parts, each of which has an inclined plane.

A filter may be installed on the outer circumference of the lower part of the valve housing below the first and second projecting parts such that the filter is fixed to the modulate block by press fit for sealing the inside of the valve.

The modulate block, into the valve housing is inserted, may include: a through hole formed through the central portion of the modulate block for receiving the valve housing; and indentations in a stepped structure corresponding to the second projecting parts of the valve housing.

The filter may be formed in a mesh structure by injection molding.

The filter may be inserted into the modulate block such that upper and lower ends of the filter are fixed and sealed into the modulate block.

The modulate block may be deformed, when the valve housing is assembled with the modulate block, to fix and seal the valve housing, and the end of the outer circumference of the valve housing may be stepped and provided with a chamber.

One end of the return spring may be supported by the sheet portion and the other end of the return spring may be supported by the armature.

### BRIEF DESCRIPTION OF THE DRAWINGS

These and/or other aspects and advantages of the invention will become apparent and more readily appreciated from the following description of the embodiments, taken in conjunction with the accompanying drawings in which:
FIG. 1 is a cross-sectional view of a conventional solenoid valve for a brake system;
FIG. 2 is a cross-sectional view of another conventional solenoid valve for a brake system;
FIG. 3 is a cross-sectional view of a solenoid valve for a brake system in accordance with a first embodiment of the present invention;
FIG. 4 is an enlarged view of the portion "D" of FIG. 3; and
FIG. 5 is a cross-sectional view of a solenoid valve for a brake system in accordance with a second embodiment of the present invention.

### DETAILED DESCRIPTION OF THE PREFERRED EMBODIMENTS

Reference will now be made in detail to the embodiments of the present invention, an example of which is illustrated in the accompanying drawings, wherein like reference numerals refer to like elements throughout. The embodiments are described below to explain the present invention by referring to the figures.

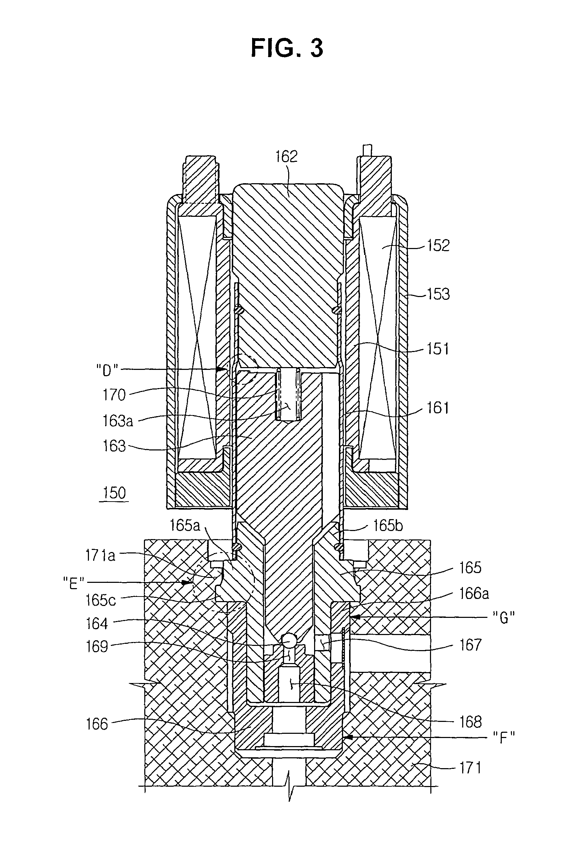

FIG. 3 is a cross-sectional view of a solenoid valve 150 for a brake system in accordance with a first embodiment of the present invention. The solenoid valve 150 of this embodiment is a normal opened type solenoid valve, which opens its channel only when power is supplied thereto.

As shown in FIG. 3, the solenoid valve 150 of the first embodiment of the present invention comprises a coil 152 wound on a bobbin 151 for forming an electromagnetic field when current is applied to the coil 152, a coil case 153 having a hollow cylindrical shape provided with an opened surface for surrounding the coil 152, and a flux ring 154 made of a disk-shaped magnetic material for covering the opened surface of the coil case 153. Thereby, the electromagnetic field formed by the coil 152 flows along a closed circuit formed by the coil case 153 and the flux ring 154.

A through hole is formed through the central portion of the solenoid valve 150 in a longitudinal direction. The solenoid valve 150 further comprises a valve housing 165 including an oil entry route 167 formed in the side surface thereof for entering oil into the solenoid valve 150 therethrough, and an oil exit route 128 and an orifice 169 formed in the lower end thereof for discharging the oil to the outside therethrough.

An armature 163 having a cylindrical shape is inserted into the through hole of the valve housing 165 and the central portion of the coil case 153 so that the armature 163 interacts with the electromagnetic field formed by the coil 152 and moves up and down, and a spherical member 164 for opening and closing the oil exit route 128 is installed on the lower end of the armature 163.

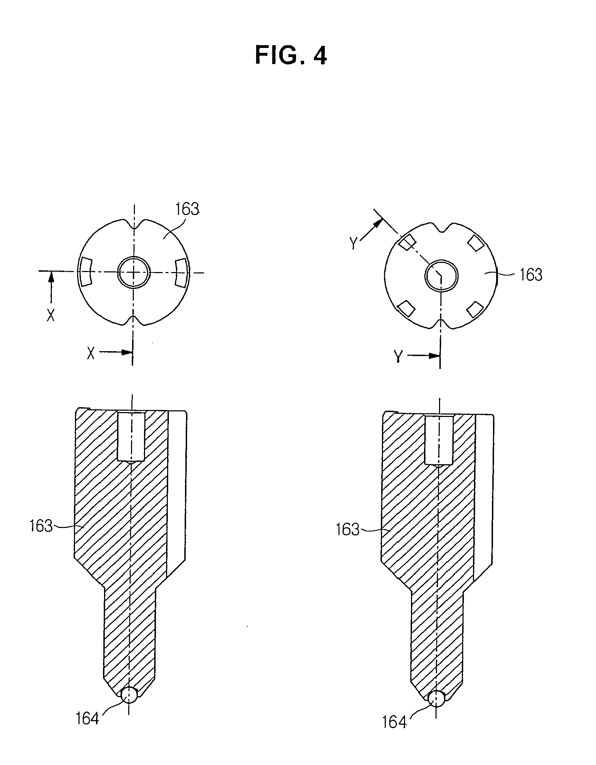

A sleeve 161 having a cylindrical shape provided with upper and lower opened ends surrounds the outer circumferences of the valve housing 165 and the armature 163. The valve housing 165 is fixedly inserted into the lower opened end of the sleeve 161, and a magnet core 162 is fixedly inserted into the upper opened end of the sleeve 161 such that the magnet core 162 is separated from the armature 163 by a designated interval. As shown in FIG. 4, a plurality of protrusions, each of which has a stepped surface, are formed on the upper end of the armature 163, i.e., the surface "D" of the armature 163 contacting the magnet core 162.

A return spring 170 for returning the armature 163 to the oil exit route 168 of the valve housing 165 is installed between the armature 163 and the magnet core 162. The return spring 170 is mounted in a groove formed in the central portion of the upper surface of the armature 163. One end of the return spring 170 is supported by the magnet core 162, and the other end of the return spring 170 is supported by the armature 163.

First projecting parts 165a are respectively formed on both portions of the outer circumference of the valve housing 165 below a stationary part 165b of the valve housing 165 fixed by the sleeve 161, and have a stepped structure. Second projecting parts 165c are respectively formed below the first projecting parts 165a.

A modulate block 171, to which the valve housing 165 is fixed, includes stepped indentations 171 a corresponding to the first and second projecting parts 165a and 165c of the valve housing 165. When the valve housing 165 is assembled with the modulate block 171, a portion of the modulate 171 is deformed so that the outer circumference including the upper end. i.e., the portion "E" of the valve housing 165 is fixed to the inner circumference of the modulate block 171, and is sealed.

A filter 166 formed in a mesh structure by injection molding surrounds the portion of the valve housing 165 below the first and second projecting parts 165a and 165c. When the filter 166 is assembled with the modulate block 171, the outer circumferences of the portion "F" and the portion "G" of the filter 166 are deformed and fixed to the inner circumference of the modulate block 171 by press fit, and are then sealed.

Now, the operation of the above-described solenoid valve 150 will be described. When an electromagnetic field is generated by applying current to the coil 152, magnetic flux flows along the coil case 153, the flux ring 154, the armature 163, and the magnet core 162, and the armature 163 moves in the opposite direction of the oil exit route 168 of the valve housing 165 against the elastic force of the return spring 170, thereby opening the oil exit route 168. Subsequently, when the current applied to the coil 152 is shut off, the armature 163 returns to its original position by the elastic force of the return spring 170, thereby closing the oil exit route 168.

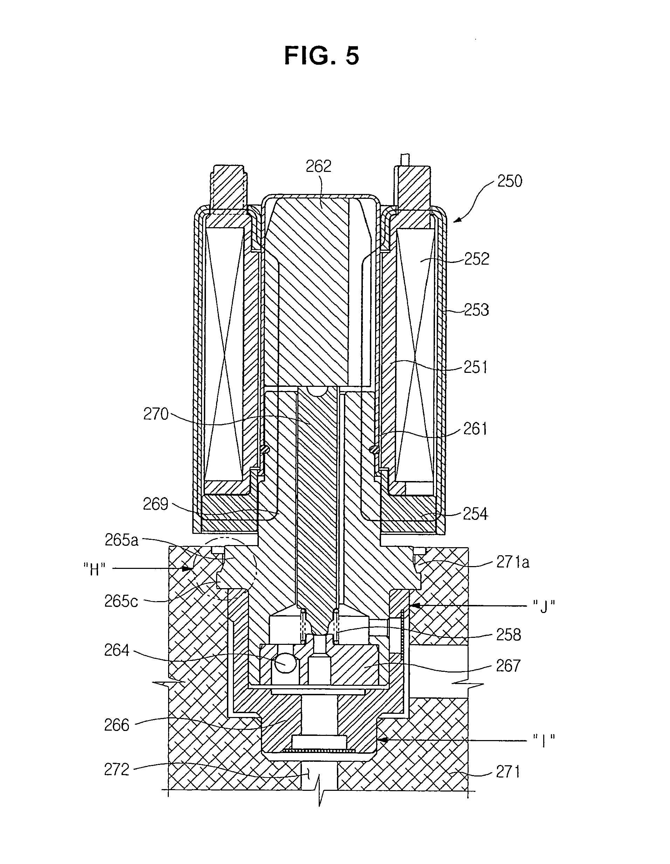

Hereinafter, with reference to FIG. 5, a solenoid valve for a brake system in accordance with a second embodiment of the present invention will be described in detail.

FIG. 5 is a cross-sectional view of a solenoid valve 250 for a brake system in accordance with a second embodiment of the present invention. The solenoid valve 250 of this embodiment is a normal opened type solenoid valve, which closes its channel when power is supplied thereto.

As shown in FIG. 5, the solenoid valve 250 of the second embodiment of the present invention comprises a coil 252 wound on a bobbin 251 for forming an electromagnetic field when current is applied to the coil 252, a coil case 253 having a hollow cylindrical shape provided with an opened surface for surrounding the coil 252, and a flux ring 254 made of a disk-shaped magnetic material for covering the opened surface of the coil case 253. Thereby, the electromagnetic field formed by the coil 252 flows along a closed circuit formed by the coil case 253 and the flux ring 254.

A through hole is formed through the central portion of the solenoid valve 250 in a longitudinal direction, and the front end of the through hole is closed by a sleeve 261. A magnet core 262, which moves up and down when power is applied thereto, is installed in the sleeve 261. An armature 270 and a valve housing 269 are installed below the magnet core 262.

A sheet portion 267, having a through hole formed through the central portion thereof and a check ball 264 for controlling the introduction and discharge of a fluid therethrough, is installed in the valve housing 269. The armature 270, which moves together with the movement of the magnet core 262 and has a circular sealing structure for opening and closing the inlet of the sheet portion 267, is installed in the valve housing 269. A return spring 258 for returning the armature 270 to the original position is installed between the armature 270 and the sheet portion 267.

The outer circumference of the magnet core 262 of the valve housing 269 is fixed to the sleeve 261, and the lower end of the valve housing 269 is fixed to a modulate block 271. When the valve housing 269 is assembled with the modulate block 271, the modulate block 271 is deformed and fixed to the valve housing 269. The end of the valve housing 269 is stepped, and provided with a chamber.

One end of the valve housing 269 is fixed to the sleeve 261, and the other end of the valve housing 269 is fixed into the modulate block 271. First projecting parts 265a are respectively formed on both portions of the outer circumference of the valve housing 269 fixed into the modulate block 271 and have a stepped structure, and second projecting parts 265c are respectively formed below the first projecting parts 165a.

The modulate block 271, into which the valve housing 265 is fixed, includes stepped indentations 271 a corresponding to the first and second projecting parts 265a and 265c of the valve housing 265. When the valve housing 265 is assembled with the modulate block 271, a portion of the modulate block 271 is deformed to fix and seal the outer circumference and the top end (portion "H") of the valve housing 265.

A filter 266 formed in a mesh structure by injection molding surrounds the portion of the valve housing 265 below the first and second projecting parts 265a and 265c. When the filter 266 is assembled with the modulate block 271, the outer circumference of the filter 166 is deformed and fixed to the inner circumference of the modulate block 171 by press fit, and is then sealed (portion "I" and portion "J").

Now, the operation of the above-described solenoid valve 250 will be described. When current is applied to the coil 252, which is assembled with the solenoid valve 261, magnetic force is generated. The magnetic force generates attractive force between the valve housing 269 and the magnet core 262. Since the valve housing 269 is fixed to the modulate block 271, the magnetic core 262 moves toward the valve housing 269, thereby pushing the armature 270. The armature 270 moves and contacts the sheet portion 267, thereby shutting off the channel connecting the inlet and the outlet. When current is released from the coil 252, the armature 270 and the magnet core 262 return to their original positions by the return spring 258 positioned between the armature 270 and the sheet portion 267.

As apparent from the above description, the present invention provides a solenoid valve for a brake system, in which a filter formed in a mesh structure by injection molding is installed on the outer circumference of the lower part of a valve housing below projecting parts, thereby causing the outer circumference of the filter to be deformed so as to decrease the pressing force of the filter, when the filter is assembled with a modulate block, so that the filter is easily assembled with the modulate block, not requiring a sealing member outside the valve housing so that the production costs of solenoid valve products are reduced, and preventing the generation of foreign substances between the valve housing and the modulate block when the armature vertically moves.

Although embodiments of the invention have been shown and described, it would be appreciated by those skilled in the art that changes may be made in these embodiments without departing from the principles and spirit of the invention, the scope of which is defined in the claims and their equivalents.

## Claims

1. A solenoid valve for a brake system, the valve comprising:
a sheet portion including a through hole formed in a longitudinal direction through the central portion thereof, and a check ball for introducing and discharging a fluid therethrough;
a valve housing having an inner diameter with a stepped structure for receiving the sheet portion;
an armature, installed in the valve housing, moving up and down and having a circular sealing structure for opening and closing an inlet of the sheet portion when power is applied thereto and released therefrom;
a sleeve installed outside the valve housing and a magnet core;
a return spring for returning the armature to its original position; and
a modulator block, into which the valve housing is inserted,
wherein the valve housing is installed in a longitudinal direction in the sleeve such that a front end of the valve housing is separated from the magnet core by a designated interval.

2. The solenoid valve according to claim 1, wherein the valve housing includes:
a through hole formed through the central portion of the valve housing;
first projecting parts formed on both portions of the outer circumference of the valve housing; and
second projecting parts, each of which has an inclined plane.

3. The solenoid valve according to claim 1, wherein a filter is installed on the outer circumference of the lower part of the valve housing below the first and second projecting parts such that the filter is fixed to the modulate block by press fit for sealing the inside of the valve.

4. The solenoid valve according to claim 1, wherein the modulate block, into the valve housing is inserted, includes:
a through hole formed through the central portion of the modulate block for receiving the valve housing; and
indentations in a stepped structure corresponding to the second projecting parts of the valve housing.

5. The solenoid valve according to claim 3, wherein the filter is formed in a mesh structure by injection molding.

6. The solenoid valve according to claim 3, wherein the filter is inserted into the modulate block such that upper and lower ends of the filter are fixed and sealed into the modulate block.

7. The solenoid valve according to claim 2, wherein the modulate block is deformed, when the valve housing is assembled with the modulate block, to fix and seal the valve housing, and the end of the outer circumference of the valve housing is stepped and provided with a chamber.

8. The solenoid valve according to claim 1, wherein one end of the return spring is supported by the sheet portion and the other end of the return spring is supported by the armature.
